# NEW EUROPEAN PATENT SPECIFICATION

(11) **EP 3 328 810 B2**
(45) Date of publication and mention of the opposition decision: **01.07.2026**
(45) Mention of the grant of the patent: 12.07.2023
(21) Application number: 16766377.2
(22) Date of filing: 29.07.2016
(51) Int. Cl.: C04B 28/04, C08K 3/00, C08L 95/00

(54) **ADMIXTURE FOR THE CONSTRUCTION OF INFRASTRUCTURAL AND STRUCTURAL PRODUCTS AND RELATED PRODUCTION PROCESS**
ZUSATZMITTEL ZUR HERSTELLUNG VON INFRASTRUKTUR- UND STRUKTURPRODUKTEN SOWIE ZUGEHÖRIGES HERSTELLUNGSVERFAHREN
MÉLANGE POUR LA CONSTRUCTION DE PRODUITS INFRASTRUCTURAUX ET STRUCTURAUX ET PROCÉDÉ DE PRODUCTION ASSOCIÉ

(30) Priority: 31.07.2015 IT UB20152750
(43) Date of publication of application: 06.06.2018
(73) Proprietor: CVR S.p.A., 06024 Gubbio (PG) (IT)
(72) Inventor: BARBETTI, Stefano, 06024 Gubbio (PG) (IT); KOCK PETERSEN, Jesper, 06024 Gubbio (PG) (IT)
(74) Representative: Di Giovine, Paolo
(86) International application number: PCT/IB2016/054580
(87) International publication number: WO 2017/021854

(56) References cited:
- EP-A1- 2 202 359
- EP-A1- 2 441 887
- GB-A- 247 238
- GB-A- 464 963
- KR-B1- 101 426 691
- US-A1- 2006 127 572
- US-A1- 2011 174 195
- LOIZOS A ET AL: "Advanced Testing and Characterization of Bituminous Materials, Table of contents", ADVANCED TESTING AND CHARACTERIZATION OF BITUMINOUS MATERIALS, CRC PRESS/BALKEMA, LEIDEN,NL, vol. 1, 1 January 2009 (2009-01-01), pages V - XIV, XP002594540, ISBN: 978-0-415-55856-3
- LOIZOS A ET AL: "Advanced Testing and Characterization of Bituminous Materials", 1 January 2009, ADVANCED TESTING AND CHARACTERIZATION OF BITUMINOUS MATERIALS, TABLE OF CONTENTS, CRC PRESS/BALKEMA, LEIDEN, NL, PAGE(S) V - XIV, ISBN: 978-0-415-55857-0, XP002594541
- CHIARA PRATELLI ET AL: "Preliminary In-Situ Evaluation of an Innovative, Semi-Flexible Pavement Wearing Course Mixture Using Fast Falling Weight Deflectometer", MATERIALS, vol. 11, no. 4, 16 April 2018 (2018-04-16), pages 611 - 625, XP055767786, DOI: 10.3390/ma11040611
- "Basic Asphalt Emulsion Manual; MS-19", 1 February 2008, ASPHALT INSTITUTE, Lexington, Kentucky, USA, ISBN: 978-1-934154-56-4, article ANONYMOUS: "Basic Asphalt Emulsion Manual; MS-19; 4th Edition", pages: i-iii,3,36,75-90, XP055308156
- LADIS H CSANYI: "Functions of Fillers in Bituminous Mixes", SYMPOSIUM ON MINERAL FILLERS FOR BITUMINOUS MIXTURES, WASHINGTON DC, 1962, 1 January 1962 (1962-01-01), pages 1 - 5, XP055767947, Retrieved from the Internet <URL:https://trid.trb.org/view/100938> [retrieved on 20210122]
- NADIA POULIOT ET AL: "Hydration Mechanisms, Microstructure, and Mechanical Properties of Mortars Prepared with Mixed Binder Cement Slurry-Asphalt Emulsion", JOURNAL OF MATERIALS IN CIVIL ENGINEERING, vol. 15, no. 1, 1 February 2003 (2003-02-01), US, pages 54 - 59, XP055767402, ISSN: 0899-1561, DOI: 10.1061/(ASCE)0899-1561(2003)15:1(54)
- C P PLUG ET AL: "IMPROVED PERFORMANCE GROUTED MACADAMS - HIGH PERFORMANCE APPLICATIONS OF GROUTED MACADAM", OOMS NEDERLAND >HOLDING CONFERENCE, 1 January 2006 (2006-01-01), Avenhorn, The Netherlands, pages 1 - 12, XP055767434, Retrieved from the Internet <URL:http://www.materialedge.co.uk/docs/CP-AdB-Stabifalt(English) 1!.pdf> [retrieved on 20210121]
- LU C T ET AL: "Composition and reaction mechanism of cement-asphalt mastic", CONSTRUCTION AND BUILDING MATERIALS, ELSEVIER, NETHERLANDS, vol. 23, no. 7, 1 July 2009 (2009-07-01), pages 2580 - 2585, XP026084268, ISSN: 0950-0618, [retrieved on 20090313], DOI: 10.1016/J.CONBUILDMAT.2009.02.014
- SHAOWEN DU: "Interaction mechanism of cement and asphalt emulsion in asphalt emulsion mixtures", MATERIALS AND STRUCTURES., vol. 47, no. 7, 18 June 2013 (2013-06-18), GB, pages 1149 - 1159, XP055766608, ISSN: 1359-5997, DOI: 10.1617/s11527-013-0118-1
- Reply to the Examining Division filed by the applicant on 6August 2021 with comparative experiments to support inventive step
- ANONYMOUS: "Highways; Highways maintenane", 1 March 2014 (2014-03-01), pages 1 - 3, XP055317303, Retrieved from the Internet <URL:http://www.milesmacadam.co.uk/wp-content/uploads/2012/06/Highways-Article.pdf> [retrieved on 20161108]
- JOEL RICARDO OLIVEIRA: "Grouted macadam: material characterisation for pavement design (Thesis)", 1 May 2006 (2006-05-01), pages 1 - 272, XP055317301, Retrieved from the Internet <URL:https://www.nottingham.ac.uk/research/groups/ntec/documents/theses/oliveira,joelphdthesis.pdf> [retrieved on 20161108]
- HUSAIN N M ET AL: "Effects of aggregate gradations on properties of Grouted Macadam composite pavement", CHEMICAL, BIOLOGICAL AND ENVIRONMENTAL ENGINEERING (ICBEE), 2010 2ND INTERNATIONAL CONFERENCE ON, IEEE, PISCATAWAY, NJ, USA, 2 November 2010 (2010-11-02), pages 128 - 131, XP031815146, ISBN: 978-1-4244-8748-6

## Description

### Technical Field

The present invention relates to an admixture for the realization of infrastructural and structural manufactured products and relative production process.

### Background Art

In the production of manufactured products used in the construction of infrastructures and structures, the use is known of appropriate binding admixtures adapted to give the manufactured products physical-mechanical characteristics such as to ensure the functionalities, in operating conditions, of the structures or infrastructures of which they will be a part.

The making is known of such binding admixtures through processes which provide for a step of mixing of the various components that make up the admixture with water, so as to obtain a plastically moldable mixture.

Such mixture, once molded according to the required shape, undergoes a curing process, with the admixture components which give rise to chemical reactions responsible for the hardening of the mixture.

A first type of binding admixtures is represented by the "bituminous" admixtures, i.e., comprising a bituminous component such as asphalt, foamed bitumen or bitumen in emulsion, which is adapted to withhold aggregates and inert materials so as to achieve bituminous conglomerates.

The latter can be used for the construction of vehicle-accessible surfaces such as, e.g., road and airport surfaces.

The bituminous component acts as a binder for the inert materials used and, after a certain time interval, necessary for the typical chemical reactions of the conglomerate curing process to occur, gives a mechanical resistance useful for withstanding the stresses induced by the static and dynamic loads which the works have to face under operating conditions.

The bituminous component, furthermore, also gives the conglomerate other properties tied to the physical-chemical nature of the bitumen itself, such as, e.g., waterproofing properties, elasticity properties, appreciable levels of plastic deformation before reaching breaking point, and so on.

The above-mentioned properties can be improved if special additive substances are added to the bituminous admixture, such as, e.g., styrene-butadiene-styrene polymers (SBS), poly-vinyl-chloride (PVC), atactic polypropylene (APP), or other thermoplastic polymers.

In this case, we speak of "additivated" or "modified" bituminous admixture. The use of this first type of known admixtures has drawbacks tied to the nature of the bitumen itself.

One drawback is tied to the low capacity to accept loads at high temperatures, with the bituminous component which tends to soften as the temperatures increase.

Consequently, at high atmospheric temperatures, especially in the summer season when the temperature of the road surface can exceed sixty degrees, the pressures exerted by the loads normally acting on the works in operating conditions can cause very high deformations, up to the impairment of the functionality of the work itself or even its breakage.

Another drawback is tied to the fact that, in conditions of exposure to the sun and the air, a bituminous admixture inevitably undergoes oxidation phenomena. Such phenomena lead to the evaporation of the aromatic and aliphatic parts of the bituminous component, with consequent alteration of the chemical bonds of the admixture.

The dispersion into the atmosphere of aliphatic and aromatic components entails serious risks for health and the environment as these are harmful to all life forms.

This leads to a progressive degradation of the mechanical properties of the conglomerate which, under the action of the stressing loads, by erosion becomes thinner until it fractures.

A second type of binding admixtures are "cement" admixtures, i.e., comprising a hydraulic binder, e.g., cement, but also cement mortars or the like, that are adapted to retain aggregates and inert materials so as to make cement conglomerates such as concrete or the like.

The cement, reacting with water and giving rise to the known hydration process, gives compression mechanical strength to the conglomerate, thus being particularly suitable for making manufactured products which have to withstand this type of stress.

This second type of admixtures also has drawbacks tied both to the physical-chemical nature of the cement, and to the large number of variables involved in the processes of hydration and curing of cement conglomerates.

In particular, the variables that affect the mechanical performance of cement conglomerates are numerous and mainly concern the composition of the clinker, the finenesses of the cement itself and the methods of application.

All these variables are difficult to control, making it difficult to diversify the production processes to obtain conglomerates having different mechanical characteristics and adaptable to different uses.

For example, while cement admixtures are particularly suitable for making structural components requiring high compressive strengths such as foundations and plinths, they are less suitable for making road surfaces.

In this latter case, in fact, in the state of stress, major shear stresses and other variables occur, such as thermal expansions, which require a certain amount of structural flexibility.

Due to the high rigidity of the cement conglomerate, a road surface made with such material requires the construction of expansion joints adapted to give the infrastructure the flexibility needed to cope with the aforementioned stresses. The expansion joints, both because of their nature and due to poor maintenance and quality of execution, are privileged points for the infiltration of rainwater below the road surface, with consequent negative effects.

Another drawback of the use of cement conglomerate in the construction of road surfaces is tied to the low resistance to wear of the outermost layer of the road surface, to atmospheric phenomena, to shocks and "pull out", i.e., the capillary rise of the salts present in the ground which penetrate the concrete and, by expanding, increase the pressure in the upper part of the road surface, causing the expulsion of the cement part.

These phenomena involve the gradual consumption of the concrete layer which covers the inert materials, exposing the latter to the direct action of atmospheric phenomena and to the action of tires and, therefore, to a gradual degradation due both to acid rain carbonation phenomena, and to rolling resistance.

The making is furthermore well known of manufactured products by combining the admixtures described above.

One example is the use of bituminous admixtures and cement admixtures for the construction of road surfaces.

In this case the admixtures are used in subsequent steps of the making of the manufactured product, in particular the cement admixture is cast inside a layer of asphalt previously made with the bituminous admixture, so as to obtain grouted macadam.

Pouliot et al. (Journal of Materials in Civil Engineering, vol. 15 no.1, 2003, pages 54-59) discloses mortars prepared with mixed binder cement slurry-asphalt emulsion. As reported in the abstract, various binders can be used for the cold recycling process, including asphalt emulsion, asphalt foam, hydraulic binders, or mixed binders. Of the latter, asphalt emulsion is most often used with the addition of a small quantity of cement (less than 2% with respect to the total mass of aggregates) to accelerate breaking of the emulsion.

However, Pouliot et al. does not to disclose the presence of at least one of polymeric elements within the hydraulic binder composition.

The combined use of the two admixtures, however, causes difficulties in the manufactured product making process, the latter requiring multiple manufacturing steps and laborious and expensive execution techniques.

### Description of the Invention

The main aim of the present invention is to provide an admixture for the realization of infrastructural and structural manufactured products which allows obtaining manufactured products with strength and elasticity values adaptable to the use of the manufactured product.

One object of the present invention is to provide an admixture for the realization of infrastructural and structural manufactured products which allows obtaining manufactured products with improved fracture resistance, fatigue resistance and durability as defined in the appended set of claims.

A further object of the present invention is to provide an admixture for the realization of infrastructural and structural manufactured products which allows making vehicle-accessible surfaces in a fast and effective way as defined in the appended set of claims.

Another object of the present invention is to provide an admixture for the realization of infrastructural and structural manufactured products which allows overcoming the mentioned drawbacks of the prior art within the ambit of a simple, rational, easy to use and affordable solution, as defined in the appended set of claims. The above mentioned objects are achieved by a process for the production of an admixture for the realization of infrastructural and structural manufactured products as defined in the appended set of claims.

It is therefore object of the invention the subject matter as defined in the appended claims.

### Brief Description of the Drawings

Other characteristics and advantages of the present invention will become better evident from the description of a preferred embodiment of an admixture for the realization of infrastructural and structural manufactured products and relative production process, illustrated by way of indicative, but non-limiting examples, in the accompanying drawings in which:
Figure 1 is a schematic view of a step of the process according to the invention;
Figure 2 is a detailed schematic view of the admixture according to the invention;
Figure 3 is a schematic view of a possible application according to the invention;
Figure 4 is a schematic view of a detail of an application of the admixture according to the invention.

### Embodiments of the Invention

With particular reference to the figures, reference numeral 1 globally designates an admixture for the realization of infrastructural and structural manufactured products.

According to a first object of the invention, the admixture 1 comprises granular inert materials 2 in a concentration by weight, evaluated with respect to the total weight of the admixture, between 50 and 81%;
a hydraulic binder compound 3 in a concentration by weight, evaluated with respect to the total weight of the admixture, between 17 and 37%; and
a bituminous binder compound 4 in a concentration by weight, evaluated with respect to the total weight of the admixture, between 2 and 10%.

Conveniently, the granular inert materials 2 are granular mineral elements of different nature, such as sand, silica, fragments of carbonate rocks, vermiculite and others still.

The hydraulic binder compound 3 of the claimed admixture comprises an hydraulic binder 7 being of the type of premixed cement and:
- polymeric elements, for simplicity not shown in the illustrations, and
- auxiliary material comprising at least one of the following materials: sand, pozzolan, silica, limestone, celluloses, silica fume.

The polymeric elements of the claimed admixture are selected from styrene-butadiene-styrene (SBS), polyvinylchloride (PVC), vinyl acetate or vinyl versatate or other thermoplastic polymers.

Advantageously, the polymeric components are present in concentration by weight, evaluated with respect to the total weight of the admixture, less than 5%.

This way it is possible to impart elastic properties to the manufactured products obtainable with the admixture 1.

The polymeric elements, in fact, increase the elasticity of the manufactured products, so as to ensure a shape memory for the products made with the admixture 1.

This implies that, within certain stress limits, the products made with the admixture 1 have an elastic behavior, in particular, formulatively modular.

In the case, for example, of structural foundations, such elastic behavior ensures an adequate response to dynamic stress (seismic actions), preserving the functionality and safety of the structure itself.

In the case, instead, of road surfaces, the above elastic behavior makes unnecessary the expansion joints otherwise required to cope with the deformations induced by temperature variations.

The auxiliary material has the function, in the process of production of the admixture, of facilitating the development of chemical reactions and chemical bonds adapted to alter the physical-chemical characteristics of the manufactured products to be obtained.

For example, pozzolan increases the water resistance of the product, while the polymers increase its elasticity.

In any case, the hydraulic binder compound 3 determines the resistance value of the manufactured products made with the admixture 1.

By increasing or decreasing the amount of the hydraulic binder compound 3, the resistance increases or decreases, giving a hypothetical user the possibility of modulating such characteristic.

The bituminous binder compound 4 of the claimed admixture is a bituminous emulsion.

Preferably, the bituminous emulsion comprises an amount of water with a concentration by weight, evaluated with respect to the total weight of the bituminous emulsion, between 40% and 60%.

Advantageously, the bituminous emulsion is of the type of a cold bituminous emulsion.

These characteristics facilitate the chemical process, described below, which leads to the formation of elastic bridges during the curing of a manufactured product made with the admixture 1.

Advantageously, the admixture 1 comprises complementary substances, for simplicity of illustration not shown in the illustrations, comprising at least one of a retardant substance, an accelerant substance, an anti-shrinkage substance, an anti-segregating substance and a water reducer.

Such substances are, e.g., as a retardant sodium gluconate, as an accelerant aluminous cements, as an anti-segregating substance cellulose ether, as a water reducer a melanin-based polycondensated, sulphonated substance, as an anti-shrinkage substance a liquid product containing organic substances.

Such substances allow the user to control the curing step of the mixtures made with the admixture 1 to realize the manufactured products, i.e., that group of chemical reactions which allow mixtures to switch from a first limit state, in which they have properties of liquidity and low resistance to deformation, to a second limit state, in which they have characteristics of solidity and high resistance to deformation.

It's herein disclosed, as useful to understand the present invention, an admixture 1 having the following composition.

The granular inert materials 2 are present in a concentration by weight, evaluated with respect to the total weight of the admixture, between 40% and 92%.

The hydraulic binder compound 3 is present in a concentration by weight evaluated with respect to the total weight of the admixture, between 8% and 60%.

The bituminous binder compound 4 is present in a concentration by weight evaluated with respect to the total weight of the admixture, between 0.3% and 13%.

Such composition allows choosing in advance the physical and mechanical characteristics of the manufactured product to be made.

By varying the quantities of the components described above it is possible to obtain more or less elastic, deformable with shape memory, and more or less rigid manufactured products, releasing the elasticity characteristics from those of rigidity.

Within the ranges of values given above, in fact, the bituminous binder compound 4, the hydraulic binder compound 3 and the inert materials 2 cooperate in such a way as to allow an increase in the rigidity of the manufactured product while preserving its elasticity.

The amount of hydraulic binder compound 3, bituminous binder compound 4 and granular inert materials 2 depends on the manufactured product to be made with the admixture 1.

Such quantities in fact affect the degree of rigidity or elasticity to be given to the end product, as well as the type of workability to be performed to make the manufactured product.

According to another embodiment of the invention, the admixture 1 has the following composition.

The granular inert materials 2 are present in a concentration by weight, evaluated with respect to the total weight of the admixture, between 58% and 73%.

The hydraulic binder compound 3 is present in a concentration by weight, evaluated with respect to the total weight of the admixture, between 25% and 35%.

The bituminous binder compound 4 is present in a concentration by weight, evaluated with respect to the total weight of the admixture, between 2% and 7%. Such composition allows obtaining manufactured products particularly adapted to realize structural, in particular anti-seismic, foundation elements.

The manufactured products made with this embodiment of the admixture 1, in fact, show enough rigidity to withstand the loads of a structure and at the same time show great dissipation capacity tied to the elasticity and the shape memory given by the bituminous component and by the polymeric elements.

In particular the bituminous binder compound 4 and the polymeric elements are present in quantities such as to provide the manufactured product with the right elastic response in the presence of dynamic stresses such as, e.g., the stresses due to seismic actions.

The result is a manufactured product resistant to static and dynamic loads and to fatigue, as demonstrated by the tests described below.

As previously mentioned, the admixture 1 according to a first object of the invention has the following composition.

The granular inert materials 2 are present in a concentration by weight, evaluated with respect to the total weight of the admixture, between 50% and 81%.

The hydraulic binder compound 3 is present in a concentration by weight, evaluated with respect to the total weight of the admixture, between 17% and 37%.

The bituminous binder compound 4 is present in a concentration by weight, evaluated with respect to the total weight of the admixture, between 2% and 10%.

Such composition makes the admixture particularly adapted to realize infrastructural manufactured products, particularly for making road and airport surfaces and the like.

The admixture 1 thus composed, in fact, allows obtaining fine products having surprising mechanical characteristics thanks to the cooperation of the materials comprised in the admixture.

In particular, the layers of road or airport surfaces made this way cover a rigidity range between 15000 MPa and 25000 MPa, i.e., a range of values which no material traditionally used for this type of manufactured products is able to cover.

For the bituminous conglomerates rigidities hardly ever reach 15000 MPa, while for concretes, values often exceed 30000 MPa.

Furthermore, the admixture 1 thus composed provides the manufactured products with excellent fatigue resistance properties (repeated loads), as described in the tests shown below.

The admixture 1 permits obtaining road surfaces which have fracture resistances typical of concretes with fatigue behaviors typical of bituminous conglomerates. Furthermore, this behavior does not vary with changes in temperature.

It's also herein disclosed, as useful to understand the present invention, an admixture 1 having the following composition.

The granular inert materials 2 are present in a concentration by weight, evaluated with respect to the total weight of the admixture, between 62% and 89%.

The hydraulic binder compound 3 is present in a concentration by weight, evaluated with respect to the total weight of the admixture, between 10% and 30%.

The bituminous binder compound 4 is present in a concentration by weight, evaluated with respect to the total weight of the admixture, between 1% and 8%. Such composition makes the admixture particularly adapted to be used as a plaster or as a leveling grout.

It's herein disclosed, as useful to understand the present invention, an admixture 1 having the following composition.

The granular inert materials 2 are present in a concentration by weight, evaluated with respect to the total weight of the admixture, between 75% and 90%.

The hydraulic binder compound 3 is present in a concentration by weight, evaluated with respect to the total weight of the admixture, between 5% and 15%.

The bituminous binder compound 4 is present in a concentration by weight, evaluated with respect to the total weight of the admixture, between 5% and 10%.

In this case, the binder 7 is of the type of a plaster and corn starch compound. Such composition makes the admixture 1 particularly adapted to be used as leveling mortar for floors or other surfaces.

Another object of the invention is represented by the use of the admixture 1 as defined in the appended claims for the realization of infrastructural and structural manufactured products, which envisages the combination of the admixture 1 with aqueous based solvent means for the preparation of a substantially homogeneous mixture 5 moldable for the realization of a manufactured product.

Preferably, the use of the admixture 1 envisages the combination of this with water.

This way a mixture 5 can be obtained to be used according to the manufactured product to be made.

In case a foundation element is to be made, the mixture 5 can be cast and then cured.

In case a road surface is to be made, the mixture 5 can be laid out like a traditional bituminous conglomerate, in a single spread.

Similarly, in case the admixture 1 is to be used as a leveling grout or leveling mortar, it will be enough to prepare the mixture 5 and spread it like traditional products.

In any case, the obtained mixture 5 is moldable, i.e., with low resistance to deformation, and has a similar behavior to a viscous liquid.

This way, the mixture 5 can be given the desired final shape.

The mixture 5 undergoes a subsequent curing step, i.e., a step during which physical and chemical reactions take place between the various substances. Such reactions essentially lead to a hardening of the mixture 5, giving it mechanical strength properties.

In particular, the main process of the curing step concerns the hydration of the hydraulic binder 7.

The hydraulic binder compound 3 draws the water present to give rise to reactions of hardening of the cement paste.

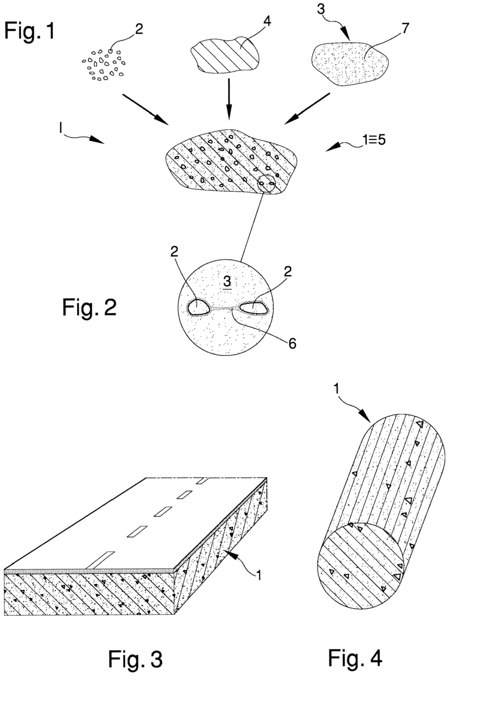

The water used in these reactions is both that added to mix the mixture 5, and that present in the bituminous emulsion of the bituminous binder compound 4. The water drawn from the emulsion drags bitumen filaments inside the mixture, creating elastic bridges 6 (figure 2) between the various coarse inert materials covered by the hydraulic binder.

This way, during the curing step, a reticular structure of bitumen is created which gives elasticity to the cured mixture 5.

The result is a synergistic union between the two binders (cement and bitumen) allowing the one to make up for the limits of the other.

Such synergy is allowed by the insertion of the bituminous bond 4 in the form of cold emulsion.

This way, in fact, the high temperatures are not reached which would otherwise break the chemical bonds that allow the synergistic action of the two binders.

The process for the production of an admixture for the construction of road surfaces or the like comprises a step of mixing I, shown in figure 1, of the following components: granular inert materials 2, a hydraulic binder compound 3, and a bituminous binder compound 4 as defined in the appended set of claims.

The process comprises a step of pre-mixing of the hydraulic binder 7 with the polymeric elements and the auxiliary material, prior to the step of mixing I, to obtain the hydraulic binder compound 3.

The step of pre-mixing comprises a step of addition of polymeric elements.

The addition of the polymeric elements allows varying the elastic modulus of the mixture 5 so as to be able to obtain, depending on the type of use, a more or less rigid or more or less elastic end product, with a memory of the initial form. The polymeric elements, as well as the bitumen in fact, integrate the structural bonds that are formed inside the mixture, giving a higher elasticity.

The step of pre-mixing also comprises a step of addition of auxiliary material. In the present treatise, by auxiliary material is meant any material that is usable in the production of pre-mixed hydraulic binders, such as e.g., sands, limestones, propylene fibers, oxides for any coloring of the manufactured products, aluminum, silicate, kaolin, blast furnace slag, celluloses, silica fume, corn starch, etc.

The auxiliary material allows facilitating the reactions that occur in the curing step and favor the synergistic compatibility between the hydraulic binder compound 3 and the bituminous binder compound 4.

The process also comprises a pre-additivation step, prior to the step of mixing of the bituminous binder compound 4 with an additive material and adapted to obtain a modified cold emulsion of the bituminous binder itself.

In the present treatise, by additive material is meant any material usable to make a modified bituminous emulsion, such as, e.g., SBS polymer or other similar polymers.

The additive material allows improving the properties of the bituminous binder compound 4 besides favoring synergy with the hydraulic binder compound 3. In the present embodiment, the cold emulsion of the bituminous binder is delayed.

The delayed bituminous emulsion is a bitumen emulsion which, thanks to its components, sets more slowly than traditional bituminous emulsions favoring the formation of bonds with the hydraulic binder compound 3.

The bituminous binder compound 4, inserted in cold emulsion, allows working at ambient temperatures much lower than those typically used to make hot asphalts, i.e., about 150°C.

Finally, the process also envisages a step of addition of complementary substances comprising at least one of a retardant substance, an accelerant substance, an anti-segregating substance and a water reducer.

Such addition of complementary substances takes place during the step of mixing, but solutions cannot be ruled out wherein such step takes place in the step of pre-mixing of the hydraulic binder compound 3 or in both steps of mixing and pre-mixing.

The mechanical properties of manufactured products obtained from such admixture have been tested both in the laboratory and in the field.

In a first experimental test, a cylindrical specimen like that of figure 4 underwent load tests in a laboratory to bring the specimen itself to fracture point.

In particular, "EN 12697-24 Indirect Tensile Fatigue Test (according to European Standard 12697-24)" was performed, with a maximum load of 1600 kPa.

The tests were performed in the Poliedro Srl laboratory, located in Via Maestri Del Lavoro 91/93, 25014, Castenedolo (BS), Italy on 7 February, 2015, and produced the following results.

A specimen made with conventional asphalt and inert materials broke after about 2,000 blows.

A specimen made with motorway binder broke after 10,500 blows with a load of 800 kPa.

A specimen made with modified bitumen and pre-mixed cement broke after 60,000 blows with maximum load of 1600 kPa.

A specimen made with modified bitumen, pre-mixed cement and added polymers was declared "indestructible" for test purposes because, after 200,000 blows, it had not yet broken despite undergoing the maximum load of 1600 kPa. The modified bitumen-premixed cement admixture results in an increase in resistance thirty times greater than the resistance of a traditional bitumen specimen.

The addition of polymers increases this resistance even more, bringing it to values at least one hundred times higher than those of traditional bitumen and about 3.5 times higher than that of the modified bitumen-premixed cement admixture.

The tests carried out demonstrate the surprising effect of the synergistic action between the cement component and the bitumen component on the mechanical properties of the admixture, with consequent advantages from the point of view of application.

In a second experimental test, an open-air test field was set up, and a road surface was made with a thickness not exceeding 12 cm with the admixture 1 and on this a campaign of repeated dynamic load tests was performed (ATP accelerated fracture test) using "fast falling weight deflectometer" (FFWD) instruments and under the scientific direction of Dr. Ing. Alessandro Marradi of Pisa University.

On the surface, repeated loads were applied in order to measure the resulting deflections of the surface to be used as data to implement a back calculation procedure in order to trace the elastic modulus values, the fracture values and other useful information.

The tests confirmed the characteristics that had emerged in the first laboratory test described above.

In particular, the ATP test took place from 12 to 14 April 2016 and was conducted by means of the repetition of 300 series of 100 load applications each, for a total of 30000 applications altogether, with an average productivity of 1200 strokes/hour.

For each stroke, the configuration was used which envisages the maximum load and the maximum drop height, so as to determine a transmitted pressure of around 1500-1600 KPa.

The central deflection at the beginning and end of the test was 477.8 micrometers and 618.4 micrometers respectively.

These data were used to calculate the evolution of the elastic modulus of the surface and used in the back-calculation procedure to trace the other data useful for characterizing the properties of the material.

After 30000 load repetitions, the investigated area did not show any cracks.

The value of the elastic modulus gradually decreased as the number of blows increased.

The surface proved more or less insensitive to heat variations.

In conclusion the two experimental tests showed that the admixture gives a high resistance to repeated loads and a gradual degradation of performance over time. It has in practice been ascertained that that the described invention achieves the intended objects.

In particular, the fact is underlined that the admixture for the realization of structural and infrastructural manufactured products thus obtained allows obtaining manufactured products with resistance and elasticity values which can be modulated, i.e., adaptable according to the use of the manufactured product. It is in fact enough to change the quantities of the various components to achieve different moduli of elasticity, while maintaining the same deformation response.

The provided admixture also allows obtaining manufactured products with improved fracture, fatigue resistance and durability.

The cooperation between the various components, demonstrated by the experimental tests, highlighted a surprising physical-mechanical behavior of the manufactured products made with the provided admixture, in particular the high resistance to deformability and shape memory, the ability to withstand heat variations, impermeability and the possibility of modulating these characteristics by varying the quantities of the components.

In other words, the provided admixture showed a surprising cooperation between all the components concerned, in particular the hydraulic and bituminous binder compounds, the polymers, the auxiliary material and the inert materials, to obtain a multi-functional product, adaptable to different types of use and with modular physical and mechanical characteristics.

Another advantage achieved by the provided admixture is that it allows making vehicle-accessible surfaces in a fast and effective way, the admixture itself being spreadable like the traditional materials already used for the construction of roads and airports.

The process according to the invention, moreover, allows obtaining an admixture usable in various fields of application.

In fact, by diversifying the amount of polymers and bituminous emulsion, a final admixture can be obtained having a different elastic modulus, so that it can be used in various applications, from structural surfaces to structural manufactured products, right up to plasters, paints and self-leveling grouts, etc. In this latter case, the admixture could be used as a surface covering which, besides being self-leveling, gives the surface itself fireproof properties and prevents the oxidization of the components of the innermost surface layers.

## Claims

1. An admixture (1) for the realization of infrastructural and structural manufactured products, comprising:
- granular inert materials (2) in a concentration by weight, evaluated with respect to the total weight of the admixture, between 50 and 81%;
- a hydraulic binder compound (3) in a concentration by weight, evaluated with respect to the total weight of the admixture, between 17 and 37 %; and
- a bituminous binder compound (4) in a concentration by weight, evaluated with respect to the total weight of the admixture, between 2 and 10%;
wherein said hydraulic binder compound (3) comprises
- at least a hydraulic binder (7) being of the type of premixed cement,
- polymeric elements, and
- auxiliary material comprising at least one of: sand, pozzolan, silica, limestone, celluloses, silica fume;
wherein said hydraulic binder compound (3) is obtained by a step of pre-mixing of the hydraulic binder (7) with the polymeric elements and the auxiliary material, prior to the mixing of at least said granular inert materials (2), said hydraulic binder compound (3) and said bituminous binder compound (4);
wherein said polymeric elements are selected from styrene-butadiene-styrene polymers (SBS), poly-vinyl-chloride (PVC), vinyl acetate or vinyl versatate or other thermoplastic polymers; and
wherein said bituminous binder compound (4) is a bituminous emulsion.

2. The admixture (1) according to the preceding claims, wherein said polymeric elements are present in a concentration by weight, evaluated with respect to the total weight of the admixture, less than 5%.

3. The admixture (1) according to any of the preceding claims, **characterized by** the fact that said bituminous emulsion comprises an amount of water with a concentration by weight, evaluated with respect to the total weight of the bituminous emulsion, between 40% and 60%.

4. The admixture (1) according to any of the preceding claims, **characterized by** the fact that said bituminous emulsion is of the type of a cold bituminous emulsion.

5. The admixture (1) according to any of the preceding claims, further comprising one or more complementary substances selected from the group of:
- a retardant substance;
- an accelerant substance;
- an anti-shrinkage substance;
- an anti-segregating substance; and
- a water reducer.

6. The admixture (1) according to any of the preceding claims, wherein
- said granular inert materials (2) are present in a concentration by weight, evaluated with respect to the total weight of the admixture, between 58-73 wt%
- said hydraulic binder compound (3) is present in a concentration by weight, evaluated with respect to the total weight of the admixture, between 25-35 wt%;
- said bituminous binder compound (4) is present in a concentration by weight, evaluated with respect to the total weight of the admixture, between 2% and 7%.

7. Use of an admixture (1) according to any of claims 1-6 for the realization of infrastructural and structural products **characterized by** the fact that is comprises a combination of said admixture (1) with aqueous based solvent means for the preparation of a substantially homogeneous mixture (5) moldable for the realization of a manufactured product.

8. A process for the production of an admixture for the realization of infrastructural and structural manufactured products, **characterized by** the fact that it comprises:
a step of mixing (I) of at least the following components:
- granular inert materials (2) in a concentration by weight, evaluated with respect to the total weight of the admixture, between 50 and 81%;
- at least a hydraulic binder compound (3) in a concentration by weight, evaluated with respect to the total weight of the admixture, between 17 and 37 %, wherein said hydraulic binder compound (3) comprises at least a hydraulic binder (7) being of the type of premixed cement; polymeric elements, and auxiliary material comprising at least one of: sand, pozzolan, silica, limestone, celluloses, silica fume; and
- at least a bituminous binder compound (4) in a concentration by weight, evaluated with respect to the total weight of the admixture, between 2 and 10%, wherein said bituminous binder compound (4) is a bituminous emulsion,
and a step of pre-mixing of said at least a hydraulic binder (7) with the polymeric elements and the auxiliary material prior to said step of mixing (I), to obtain said hydraulic binder compound (3);
wherein said polymeric elements are selected from styrene-butadiene-styrene polymers (SBS), poly-vinyl-chloride (PVC), vinyl acetate or vinyl versatate or other thermoplastic polymers.

9. The process according claim 8, **characterized by** the fact that it comprises a pre-additivation step, prior to said step of mixing (I), of said bituminous binder compound (4) with an additive material, adapted to obtain a modified cold bituminous emulsion.

10. The process according to one or more of claims 8 or 9, **characterized by** the fact that it comprises a step of addition of complementary substances comprising at least one of a retardant substance, an accelerant substance, an anti-shrinkage substance, an anti-segregating substance and a water reducer.

## Patentansprüche

1. Zusatzmittel (1) für die Herstellung von Infrastruktur- und Strukturprodukten, umfassend:
- körnige inerte Materialien (2) in einer Gewichtskonzentration zwischen 50 und 81%, ermittelt in Bezug auf das Gesamtgewicht des Zusatzmittels,
- ein hydraulisches Bindemittelgemisch (3) in einer Gewichtskonzentration zwischen 17 und 37 %, ermittelt in Bezug auf das Gesamtgewicht des Zusatzmittels, und
- ein bituminöses Bindemittelgemisch (4) in einer Gewichtskonzentration zwischen 2 und 10 %, ermittelt in Bezug auf das Gesamtgewicht des Zusatzmittels,
wobei das hydraulische Bindemittelgemisch (3) umfasst
- mindestens ein hydraulisches Bindemittel (7) vom Typ eines vorgemischten Zements,
- polymeren Elementen, und
- Hilfsmaterial, das mindestens eines der folgenden Elemente umfasst: Sand, Puzzolan, Kieselerde, Kalkstein, Zellulose, Kieselerdestaub;
wobei das hydraulische Bindemittelgemisch (3) durch einen Schritt des Vormischens des hydraulischen Bindemittels (7) mit den polymeren Elementen und dem Hilfsmaterial vor dem Mischen von mindestens den körnigen inerten Materialien (2), dem hydraulischen Bindemittelgemisch (3) und dem bituminösen Bindemittelgemisch (4) erhalten wird;
wobei die polymeren Elemente ausgewählt sind aus Styrol-Butadien-Styrol-Polymeren (SBS), Polyvinylchlorid (PVC), Vinylacetat oder Vinylversatat oder anderen thermoplastischen Polymeren; und
wobei das bituminöse Bindemittelgemisch (4) eine bituminöse Emulsion ist.

2. Zusatzmittel (1) gemäß dem vorhergehenden Anspruch, wobei die polymeren Elemente in einer Gewichtskonzentration von weniger als 5 %, ermittelt in Bezug auf das Gesamtgewicht des Zusatzmittels, vorhanden sind.

3. Zusatzmittel (1) gemäß einem der vorhergehenden Ansprüche, **dadurch gekennzeichnet, dass** die bituminöse Emulsion eine Wassermenge mit einer Gewichtskonzentration zwischen 40 und 60 %, ermittelt in Bezug auf das Gesamtgewicht der bituminösen Emulsion, umfasst.

4. Zusatzmittel (1) gemäß einem der vorangehenden Ansprüche, **dadurch gekennzeichnet, dass** die bituminöse Emulsion vom Typ einer kalten bituminösen Emulsion ist.

5. Zusatzmittel (1) gemäß einem der vorangehenden Ansprüche, ferner umfassend eine oder mehrere ergänzende Substanzen, ausgewählt aus der Gruppe von
- einer verzögernden Substanz;
- einer beschleunigenden Substanz;
- einer Antischrumpf-Substanz;
- einer entmischungshemmenden Substanz; und
- einem Wasserreduzierer.

6. Zusatzmittel (1) gemäß einem der vorhergehenden Ansprüche, wobei
- die körnigen inerten Materialien (2) in einer Gewichtskonzentration zwischen 58-73 Gewichtsprozent, ermittelt in Bezug auf das Gesamtgewicht des Zusatzmittels, vorhanden sind
- das hydraulische Bindemittelgemisch (3) in einer Gewichtskonzentration zwischen 25-35 Gewichtsprozent, ermittelt in Bezug auf das Gesamtgewicht des Zusatzmittels, vorhanden ist;
- das bituminöse Bindemittelgemisch (4) in einer Gewichtskonzentration zwischen 2 und 7 %, ermittelt in Bezug auf das Gesamtgewicht des Zusatzmittels, vorhanden ist.

7. Verwendung eines Zusatzmittels (1) gemäß einem der Ansprüche 1 bis 6 zur Herstellung von Infrastruktur- und Strukturprodukten, **gekennzeichnet durch** die Tatsache, dass es eine Kombination des Zusatzmittels (1) mit einem Lösungsmittel auf wässriger Basis zur Herstellung einer im Wesentlichen homogenen Mischung (5) umfasst, die zur Herstellung eines Fertigungsprodukts formbar ist.

8. Verfahren zur Herstellung eines Zusatzmittels für die Herstellung von Infrastruktur- und Strukturprodukten, **gekennzeichnet durch** die Tatsache, dass es umfasst:
einen Schritt des Mischens (I) von mindestens den folgenden Komponenten:
- körnige, inerte Materialien (2) in einer Gewichtskonzentration zwischen 50 und 81 %, ermittelt in Bezug auf das Gesamtgewicht des Zusatzmittels;
- mindestens ein hydraulisches Bindemittelgemisch (3) in einer Gewichtskonzentration, die, bezogen auf das Gesamtgewicht des Zusatzmittels, zwischen 17 und 37 % liegt, wobei das hydraulische Bindemittelgemisch (3) mindestens ein hydraulisches Bindemittel (7) vom Typ vorgemischter Zement; polymere Elementen und Hilfsmittel, die mindestens eines der folgenden Elemente umfassen: Sand, Puzzolan, Kieselerde, Kalkstein, Zellulose, Kieselerdestaub; und
- mindestens ein bituminöses Bindemittelgemisch (4) in einer Gewichtskonzentration zwischen 2 und 10 %, ermittelt in Bezug auf das Gesamtgewicht des Zusatzmittels, wobei das bituminöse Bindemittelgemisch (4) eine bituminöse Emulsion ist,
und einen Schritt des Vormischens des mindestens einen hydraulischen Bindemittels (7) mit den polymeren Elementen und dem Hilfsmaterial vor dem Schritt des Mischens (I), um das hydraulische Bindemittelgemisch (3) zu erhalten;
wobei die polymeren Elemente ausgewählt sind aus Styrol-Butadien-Styrol-Polymeren (SBS), Polyvinylchlorid (PVC), Vinylacetat oder Vinylversatat oder anderen thermoplastischen Polymeren.

9. Verfahren gemäß Anspruch 8, **gekennzeichnet durch** die Tatsache, dass es vor dem Schritt des Mischens (I) einen Voradditivierungsschritt des bituminösen Bindemittelgemisches (4) mit einem Additivmaterial umfasst, das geeignet ist, eine modifizierte kalte bituminöse Emulsion zu erhalten.

10. Verfahren gemäß einem oder mehreren der Ansprüche 8 oder 9, **gekennzeichnet durch** die Tatsache, dass es einen Schritt der Zugabe von komplementären Substanzen umfasst, die wenigstens eines umfasst von einer verzögernden Substanz, einer beschleunigenden Substanz, einer Antischrumpfsubstanz, einer entmischungshemmenden Substanz und einem Wasserreduzierer.

## Revendications

1. Mélange (1) pour la réalisation de produits manufacturés structurels et infrastructurels, comprenant :
- des matériaux inertes granulaires (2) à une concentration en poids, évaluée par rapport au poids total du mélange, comprise entre 50 et 81 % en poids ;
- un composé liant hydraulique (3) à une concentration en poids, évaluée par rapport au poids total du mélange, comprise entre 17 et 37 % ; et
- un composé liant bitumineux (4) à une concentration en poids, évaluée par rapport au poids total du mélange, comprise entre 2 et 10 % ;
dans lequel le composé liant hydraulique (3) comprend
- au moins un liant hydraulique (7) qui est de type ciment prémélangé,
- des éléments polymères, et
- un matériau auxiliaire comprenant au moins l'un parmi : le sable, la pouzzolane, la silice, le calcaire, les celluloses, la silice fumée ;
dans lequel ledit composé liant hydraulique (3) est obtenu par une étape de prémélange du liant hydraulique (7) avec éléments polymères et le matériau auxiliaire, avant le mélange au moins desdits matériaux inertes granulaires (2), dudit composé liant hydraulique (3) et dudit composé liant bitumineux (4) ;
dans lequel lesdits éléments polymères sont choisis parmi les polymères de styrène-butadiène-styrène (SBS), le poly(chlorure de vinyle) (PVC), l'acétate de vinyle et le versatate de vinyle, ainsi que d'autres polymères thermoplastiques ; et
dans lequel ledit composé liant bitumineux (4) est une émulsion bitumineuse.

2. Mélange (1) selon la revendication précédente, dans lequel lesdits éléments polymères sont présents à une concentration en poids, évaluée par rapport au poids total du mélange, inférieure à 5 %.

3. Mélange (1) selon l'une quelconque des revendications précédentes, **caractérisé en ce que** ladite émulsion bitumineuse comprend une quantité d'eau à une concentration en poids, évaluée par rapport au poids total de l'émulsion bitumineuse, comprise entre 40 % et 60 %.

4. Mélange (1) selon l'une quelconque des revendications précédentes, **caractérisé en ce que** ladite émulsion bitumineuse est du type émulsion bitumineuse froide.

5. Mélange (1) selon l'une quelconque des revendications précédentes, comprenant en outre une ou plusieurs substances complémentaires choisies dans le groupe suivant :
- une substance retardatrice ;
- une substance accélératrice ;
- une substance anti-retrait ;
- une substance anti-ségrégation ; et
- un réducteur d'eau.

6. Mélange (1) selon l'une quelconque des revendications précédentes, dans lequel
- lesdits matériaux inertes granulaires (2) sont présents à une concentration en poids, évaluée par rapport au poids total du mélange, comprise entre 58 et 73 % en poids,
- ledit composé liant hydraulique (3) est présent à une concentration en poids, évaluée par rapport au poids total du mélange, comprise entre 25 et 35 % en poids ;
- ledit composé liant bitumineux (4) est présent à une concentration en poids, évaluée par rapport au poids total du mélange, comprise entre 2 % et 7 %.

7. Utilisation d'un mélange (1) selon l'une quelconque des revendications 1 à 6 pour la réalisation de produits manufacturés structurels et infrastructurels, **caractérisée en ce qu'**elle comprend une combinaison dudit mélange (1) avec un moyen solvant à base d'eau pour la préparation d'un mélange pratiquement homogène (5) pouvant être moulé pour la réalisation d'un produit manufacturé.

8. Procédé pour la production d'un mélange pour la réalisation de produits manufacturés structurels et infrastructurels, **caractérisé en ce qu'**il comprend :
une étape de mélange (I) au moins des composants suivants :
- des matériaux inertes granulaires (2) à une concentration en poids, évaluée par rapport au poids total du mélange, comprise entre 50 et 81 % ;
- au moins un composé liant hydraulique (3) à une concentration en poids, évaluée par rapport au poids total du mélange, comprise entre 17 et 37 %, lequel composé liant hydraulique (3) comprend au moins un liant hydraulique (7) qui est de type ciment prémélangé ; éléments polymères, et un matériau auxiliaire comprenant au moins l'un parmi : le sable, la pouzzolane, la silice, le calcaire, les celluloses, la silice fumée ; et
- au moins un composé liant bitumineux (4) à une concentration en poids, évaluée par rapport au poids total du mélange, comprise entre 2 et 10 %, lequel composé liant bitumineux (4) est une émulsion bitumineuse,
et une étape de prémélange dudit au moins un liant hydraulique (7) avec éléments polymères et
le matériau auxiliaire avant ladite étape de mélange (I), pour que soit obtenu ledit composé liant hydraulique (3) ;
dans lequel lesdits éléments polymères sont choisis parmi les polymères de styrène-butadiène-styrène (SBS), le poly(chlorure de vinyle) (PVC), l'acétate de vinyle et le versatate de vinyle, ainsi que d'autres polymères thermoplastiques.

9. Procédé selon la revendication 8, **caractérisé en ce qu'**i**l** comprend une étape de pré-additivation, avant ladite étape de mélange (I), dudit composé liant bitumineux (4) avec un matériau additif adapté pour que soit obtenue une émulsion bitumineuse froide modifiée.

10. Procédé selon une ou plusieurs des revendications 8 et 9, **caractérisé en ce qu'**il comprend une étape d'addition de substances complémentaires comprenant au moins l'un parmi une substance retardatrice, une substance accélératrice, une substance anti-retrait, une substance anti-ségrégation et un réducteur d'eau.
